# EUROPEAN PATENT SPECIFICATION

(11) **EP 3 367 242 B1**
(45) Date of publication and mention of the grant of the patent: **07.04.2021**
(21) Application number: 17157831.3
(22) Date of filing: 24.02.2017
(51) Int. Cl.: G06F 11/14, G06F 11/07

(54) **METHOD OF ERROR DETECTION IN A MICROCONTROLLER UNIT**
FEHLERERKENNUNGSVERFAHREN IN EINEM MIKROCONTROLLER
PROCÉDÉ DE DÉTECTION D'ERREURS DANS UN MICROCONTRÔLEUR

(43) Date of publication of application: 29.08.2018
(73) Proprietor: Bombardier Transportation GmbH, 10785 Berlin (DE)
(72) Inventor: KARLSSON, Mikael, 113 49 Stockholm (SE); SUNDVALL, Karl-Erik, 136 66 Vendelsö (SE); UDD, Carl-Henrik, 641 93 Katrineholm (SE)
(74) Representative: Bjerkéns Patentbyrå KB (Stockholm)

(56) References cited:
- DE-A1- 10 219 501
- DE-A1-102008 043 374
- LOVRIC T: "Detecting hardware-faults with systematic and design diversity: experimental results", COMPUTER SYSTEMS SCIENCE AND ENGINEE,, vol. 11, no. 2, 1 March 1996 (1996-03-01), pages 83-92, XP009127286,

## Description

### Technical field

The present disclosure relates to a method in a microcontroller unit for hardware error detection. In particular the disclosure relates to usage of execution models in a singular architecture in order to achieve higher detection of permanent and sporadic CPU and memory errors in safe systems.

### Background

In so-called lockstep systems the same set of operations are run at the same time in parallel. The redundancy allows error detection and error correction: the output from lockstep operations can be compared to determine if there has been a fault if there are at least two systems (dual modular redundancy), and the error can be automatically corrected if there are at least three systems (triple modular redundancy), via majority vote. The term "lockstep" originates in the army usage where it refers to the synchronized walking, in which the marchers walk as closely together as physically practical. To run in lockstep, each system is set up to progress from one well-defined state to the next well-defined state. When a new set of inputs reaches the system, it processes them, generates new outputs and updates its state. This set of changes (new inputs, new outputs, a new state) is considered to define that step, and must be treated as an atomic transaction; in other words, either all of it happens, or none of it happens, but not something in between. Sometimes a time-shift (delay) is set between systems, which increases the detection probability of errors induced by external influences (e.g., voltage spikes, ionizing radiation, or in situ reverse engineering).

Some vendors, including Intel, use the term lockstep memory to describe a multichannel memory layout in which cache lines are distributed between two memory channels, so one half of the cache line is stored in a dual in-line memory module (DIMM) on the first channel, while the second half goes to a DIMM on the second channel. A DIMM comprises a series of dynamic random-access memory integrated circuits.

By combining the single error correction and double error detection (SECDED) capabilities of two ECC-enabled DIMMs in a lockstep layout, their *single-device data correction* (SDDC) nature can be extended into *double-device data correction* (DDDC), providing protection against the failure of any single memory chip. Downsides of the Intel's lockstep memory layout are the reduction of effectively usable amount of RAM (in case of a triple-channel memory layout, maximum amount of memory reduces to one third of the physically available maximum), and reduced performance of the memory subsystem.

When the computing systems are duplicated, where both channels process each step, it is difficult to arbitrate between them if their outputs differ at the end of a step. For this reason, it is common practice to run dual modular redundancy (DMR) systems as "master/slave" configurations with the slave as a "hot-standby" to the master, rather than in lockstep. Since there is no advantage in having the slave unit actively process each step, a common method of working is for the master to copy its state at the end of each step's processing to the slave. Should the master fail at some point, the slave is ready to continue from the previous known good step.
While either the lockstep or the DMR approach (when combined with some means of detecting errors in the master) can provide redundancy against hardware failure in the master, they do not protect against software-caused failures. If the master fails because of a software error, it is highly likely that the slave - in attempting to repeat the execution of the step which failed - simply will repeat the same error and fail in the same way, an example of a common mode failure.

Previous attempts to solve these problems will be briefly discussed in the following.
Major safety integrated system (SIS) suppliers provide redundant hardware configurations based on 1oo2 (1 out of 2), 2oo3, and 2oo4 configurations. Applications of 2oo3 and 2oo4 configurations are designed to provide a higher level of reliability while simultaneously reducing the probability of a false trip shutting down a process unnecessarily.

Detection of undetected faults in central processing units (CPUs) and memories (internal or external) is usually handled by introduction of a dual hardware structure, i.e., 2oo2 (2 out of 2) systems with two different CPU boards (with the same or different CPUs) or by using diversified software in a singular CPU (A/B code), where the B-code uses different data representation in order to improve error detection.

Some software cannot be executed in a 2oo2 HW architecture with different CPU architecture in each channel, nor can it run as A/B code with different data representation. This applies to, e.g., floating point calculations where such mathematical expressions must be rewritten as integer in order to show equality. Usage of 2oo2 hardware also gives a large overhead in software complexity in order to handle synchronisation.
2oo2 systems have the outputs wired in parallel, requiring both contacts to operate to initiate a process shutdown. Since the contacts are in parallel, nuisance trips by one contact are reduced but the obvious drawback is that a dangerous failure scenario with a failure to operate on demand is doubled, making the system less safe.

Vendors of Automatic Train Protection systems and products with high Safety Integrity Level (SIL) >3 have a dual hardware architecture structure with singular code running in each channel in two processor boards or are using A/B code (diversity) with memory tests in order to comply with the tolerable failure rate of the CPU core and memories (internal/external).

The main reason for using a lock step microcontroller unit (MCU) is the improved fault detection at a hardware level compared to using a single core MCU platform. Due to this, the application software can be made less complex to achieve the desired safety level. The error detection improvements are:
1. Fast hardware fault detection, faults will be detected every second CPU clock cycle.
2. Hard and soft faults in CPU cores logic affecting only one core will be detected by the core cross comparator.

The following HW faults may occur in MCU and memories.
1. MCU faults in instructions, registers, cache memory, interrupts, etc.
   a. Systematic HW faults
   b. Random HW faults
2. ROM and RAM faults.
   a. Systematic HW faults
   b. Random HW faults

It is difficult to quantify the rate for systematic faults. According to above, the approach is to as far as possible eliminate fault causes through failure mode and effects analysis (FMEA).

Any remaining systematic faults in hardware are counteracted by that the faults let the application run. However, complying with the highest demands with respect to hardware fault detection is difficult with this concept.

Relevant background art:
DE-10219501-A1 relates to a system and method for improving fault control measures, especially in automation systems. This document discloses the creation of two different code instances from identical source code by using different complilers.

Lovric, T.: "Detecting hardware-faults with systematic and design diversity: experimental results" (1996). This document relates to the combined utilization of so-called systematic diversity and design diversity in a time-redundant so-called virtual duplex system instead of the structural redundant duplex system. DE-102008043374-A1 discloses a fault-tolerant system which can be used particularly in safety-critical applications and is adapted to detect temporary and systematic error.

One object of the present invention is to achieve a method in a microcontroller unit (MCU) with an improved likelihood to detect hardware faults in CPUs and memories. Other objects are to reduce hardware costs and to reduce the power consumption as no 2oo2 hardware is required, and to reduce software costs, since no complex diversified programming with different data representation is needed.

### Summary

The above-mentioned objects are achieved by the present invention according to the independent claim.

Preferred embodiments are set forth in the dependent claims.

The present invention relates to aspects of how software is used in the CPU to detect non-discovered hardware faults, i.e., how software is handled in the CPU, and is not bound by a specific architecture to implement the solution.

By applying the present invention it is made possible to build small safety products with much higher likelihood to detect hardware errors in CPUs, it is made possible to reduce hardware costs and get lower power consumption in comparison to the presently applied techniques due to the fact that no 2oo2 hardware is needed, and it is made possible to reduce software costs since no complex diversified programming with different data representation is needed.

The method according to the present invention will provide better detection of undetected errors, and by using, according to one embodiment, a concept with two equal A-codes using different compilers which are linked to a single code running sequentially in one processor there is no need to argue for proven in use compilers, etc., as compiler errors will be detected in the concept.

The advantage is that the method makes it possible to use, e.g., SIL 3 multicore processors and also single core processors to reach a higher SIL level regarding undetected faults than today, and simplify development methods compared to 2oo2 and A/B code systems with reduced costs. Compared to a 2oo2-system or 2003-system it will be less expensive and consume less power as only one hardware-unit is required in accordance with the present invention.

Still another advantage is that all computer platforms that need to have a higher Safety Integrity Level than today's multicore processors, can keep the architecture and by implementing the method and the unit according to the present invention achieve more demanding Tolerable Hazard Rate (THR) figures. This is needed for some functions when developing safe systems, makes it simpler to build fast scheduling, small, and safe I/O with low power consumption, and ATP (Automated Train Protection) applications for train related safety products complying with much lower THR figures than exist today.

According to the invention the execution of a particular code instance is made twice in sequence at different points of time. The difference between the disclosed concepts is how different the respective calculations are made in the different examples. By executing the functionality twice, separated in time, the probability of sporadic errors, e.g., disturbances, influencing the function without being detected is reduced.
An A/B-system requires separate developers of the A- and B-codes. It is faster to develop one software, the A-code, than developing double software (A- and B-code). In those cases where different codes are applied (A' and A^{C'}) they are a simplified modification of the prime variation, which may be generated by a tool described below. The overall development time is shorter and thus the development cost is lower.

The invention has many different applications, e.g., various safety critical on-board systems for railway signaling.
Detailed calculations have been done for all concepts disclosed below which support the methods, which all lead to that the use of lower safety integrity CPUs combined with conceptual methods reach much higher detection of CPU errors and still keep compilation integrity, etc.

### Brief description of the drawings

Figure 1 is a flow diagram illustrating the method according to the present invention.
Figure 2 is a schematic illustration of a method according to a non-claimed embodiment.
Figure 3 is a schematic illustration of the method according to a claimed embodiment.
Figure 4 is a schematic illustration of a method according to a another non-claimed embodiment.
Figure 5 is a schematic illustration of a method according to a another non-claimed embodiment.
Figure 6 is a schematic block diagram of the microcontroller unit according to the present invention.

### Detailed description

The method and the microcontroller unit will now be described in detail with references to the appended figures. Throughout the figures the same, or similar, items have the same reference signs. Moreover, the items and the figures are not necessarily to scale, emphasis instead being placed upon illustrating the principles of the invention.

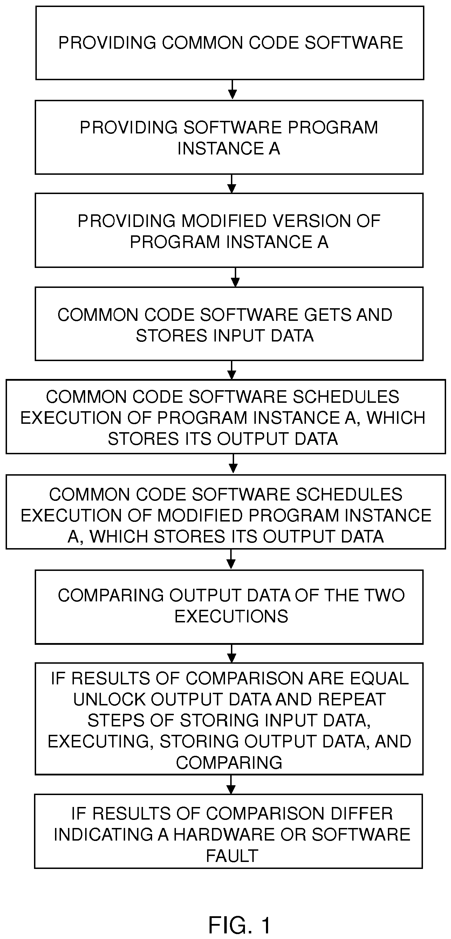

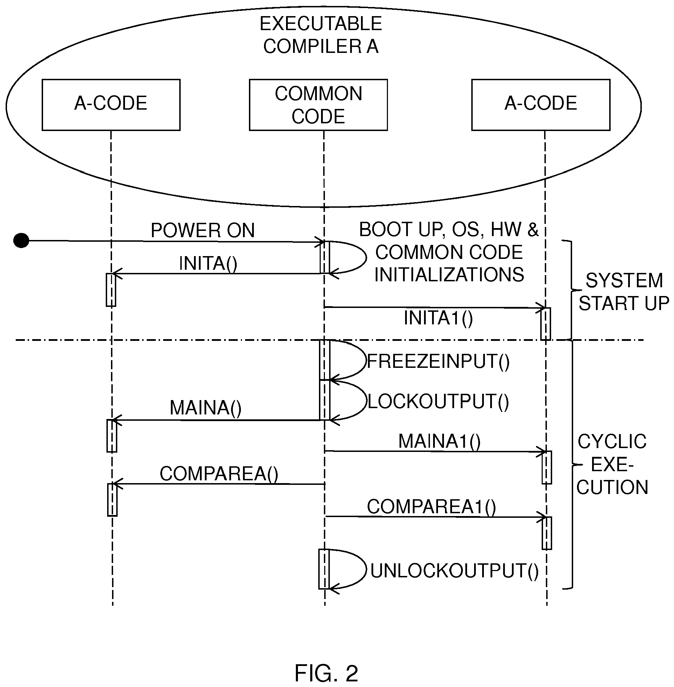

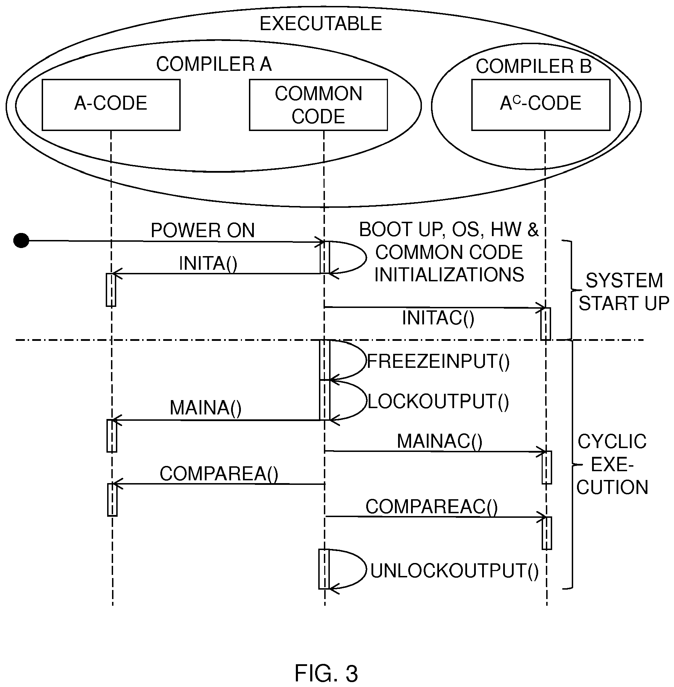

The method according to the present invention will now be described, first generally with references to the flow diagram shown in figure 1, and then by referring to Fig. 3. Non-claimed illustrative embodiments are shown in figures 2, 4 and 5.

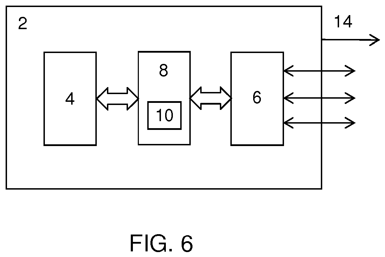

Thus, the invention comprises a method of hardware (HW) error detection in a microcontroller unit (MCU) that comprises a memory unit, an interface member and a central processing unit (CPU) comprising at least one processer core. The microcontroller unit is configured to execute software programs. The microcontroller unit will be described below with references to figure 6.

The method comprises providing a software program comprising executable machine instructions; the program is basically divided into three parts, one common part and two instances, A and modified A, performing the same functions. The method further comprises storing input data by the common part, and then executing, by the CPU, the first instance A and the modified instance A sequentially, i.e., the instance A and the modified instance A are not executed at the same time, instead one is executed before the other, in any order. Thereafter, storing output data of the executed instances being the results of the execution of the respective program instance, and comparing the output data of the sequentially executed program instance A and the modified instance A.

Each of the two instances of software has a dedicated memory area for its set of results. Preferably, both instances compare their result with the result of the other instance, but the comparison can also be performed in the common part.

If the results of the comparison are equal the stored output data is unlocked and the method comprises cyclically repeating the steps of storing input data, executing the instance A and said modified instance A, storing the results, and comparing the results.

If the results differ, the method comprises indicating a hardware or software error by, e.g., generating an indication signal.

The different embodiments are summarized in the table below, in which only the second row corresponds to the claimed invention, and then discussed in detail with references to figures 2-5.

The following functions are used in the figures in this section.

"freezeInput()" shall freeze the input data state of the application, and for example copy data from device drivers into application data buffers.

"lockOutput()" shall lock the output data state of the application, and for example invalidate any output data from a previous execution cycle.

"unlockOutput()" shall unlock the output data state of the application, and for example send output data to device drivers and external communication

| | |
|---|---|
| **A/A** | Two instances (A, A) of code generated from essentially identical source code are scheduled sequentially in an MCU, and the results are compared. A difference is handled in a safe way. |
| **A/A^{c}** | Two instances (A, A^{c}) of code generated from essentially identical source code run through two different compilers are scheduled sequentially in an MCU, and the results are compared. A difference is handled in a safe way. |
| **A/A'** | Two instances (A, A') of code generated from essentially identical source code are scheduled sequentially in an MCU, and the results are compared. A difference is handled in a safe way. The A and A' source codes use different data representations. The A' source code may be produced by processing the A source code in a tool. |
| **A/A^{c}'** | Two instances (A, A^{c}') of code generated from essentially identical source code run through different compilers are scheduled sequentially in an MCU, and the results are compared. A difference is handled in a safe way. The A and A^{C'} source codes use different data representations. The A^{C}' source code may be produced by processing the A source code in a tool. |

channels. It should be noted that this function is allocated to the doubled channels, i.e. the sequentially run source codes.

### A/A-code concept

According to this concept the modified version of the program instance A is essentially identical to the program instance A. This embodiment is illustrated in figure 2.

The two instances of executable code generated from essentially identical source code are scheduled sequentially in an MCU, and the results are compared. A difference is handled in a safe way.

There must be some difference between the two instances (it is not allowed to have several functions with identical names). In the figure the names have been appended with "1" for one of the instances. There is no difference in how the calculations are performed. The executable code is the same and the calculations are the same. The same machine instructions are used. The two instances use different memory cells for their operations.

### A/A^{C}-code concept

According to the invention the method comprises providing a modified version of program A, such that the modified version A^{C} of the program instance A is created by using a different compiler than the one used for the program instance A. This embodiment is illustrated in figure 3.

Two instances of code generated from essentially identical source code run through different compilers - denoted compiler A and compiler B in the figure - are scheduled sequentially in an MCU, and the results are compared. A difference is handled in a safe way. There must be some difference between the two source codes, otherwise name clashes would occur for the function names. This may, e.g., be handled by a pre-processing step, or possibly in some more automated way. There is a common code part that schedules execution of both instances of the application. This common part is compiled together with one instance of the source code (the A-code) using one compiler (compiler A). The other instance is compiled with a different compiler (compiler B) creating a library (the A^{C}-code). All is linked together into the final executable code.

The execution is similar to the concept of diversified software, but instead of executing A- and B-code, the B-code is replaced by the A^{C}-code.

There is no functional difference in how the calculations are performed. However, the executable code differs, as different compilers are used (different machine instructions).

### A/A'-code

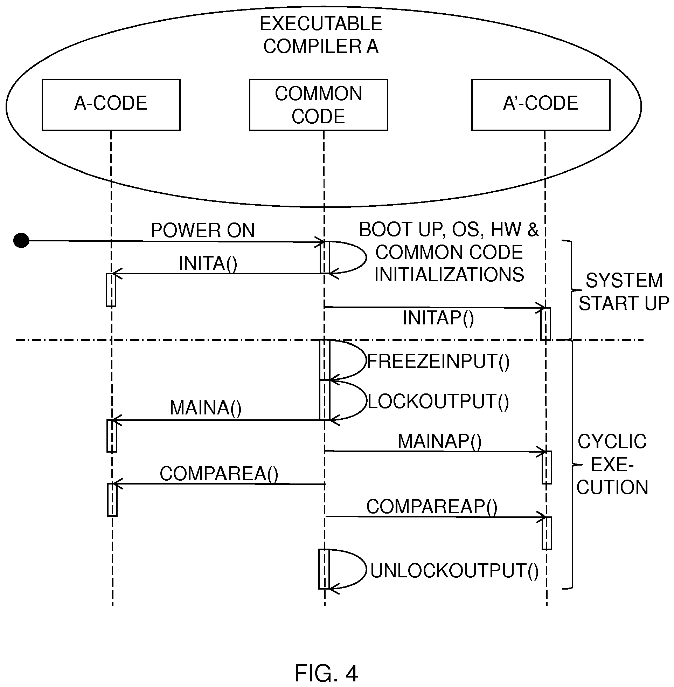

According to this concept the method comprises providing a modified version of the source code A to achieve the modified version A'.This embodiment is illustrated in figure 4.

Two instances of code generated from the same initial source code are scheduled sequentially in an MCU, and the results are compared. A difference is handled in a safe way. The A and A' source codes use different data representations. The A' source code may be produced by processing the A source code in a tool.

There will be a rather big difference between the two instances, since they use different data representations. The A' source code data representation can be similar (or equal to) the B-code representation used in diversified software systems. By creating data types with overloaded methods with syntax equal to the A source code syntax a lot of work can be saved.

The execution is similar to the concept of diversified software, but instead of executing A- and B-code, the B-code is replaced by the A'-code.

The A' source code has a different data representation in comparison to the A source code. It may, e.g., be bit-inverted, e.g., an 8-bits variable having a value 0 is in the A source code represented as 0x00, whereas in the A' source code it is represented as 0xFF. To create the A' source code all constants in the A source code are exchanged to their inverted bit value. Furthermore, all functions and operators must be exchanged; e.g., if an "increment" is performed in the A source code, the A' source code must perform a "decrement".

The tool may be a sort of source code parser configured to modify the code.

As an alternative, the modifications of the code are made manually by a software engineer.

### A/A^{C}'-code concept

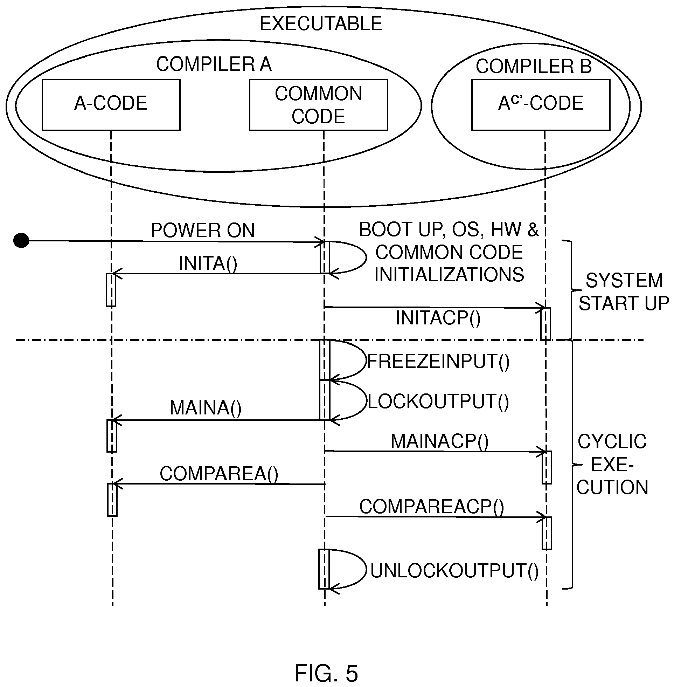

According to this concept the method comprises providing a modified version A^{C,} of the code A by first applying a predefined modification tool on the source code A to generate the source code A', and then use one compiler for generating the executable code A from the unmodified source code A, and another compiler for generating the executable code A^{C,} from the modified source code A'. This embodiment is illustrated in figure 5.

Two instances of code generated from essentially identical source code run through different compilers are scheduled sequentially in an MCU, and the results are compared. A difference is handled in a safe way. The A and A^{C,} codes use different data representations. The A^{C,} code may be produced by processing the A code in a tool. This is a combination of the A/A^{C}-code concept and the A/A'-code concept. The calculations are performed differently as A' has another data representation than A. The machine instructions differ even more in comparison to A/A' as another compiler is used for A^{C'}.

The following features are applicable to all embodiments described above.

All the steps which are cyclically repeated have an overall duration in the order of 1 - 500 ms. In the figures 2-5 these steps are below the horizontal dot dash line. The duration is naturally dependent of the complexity of the processing steps.

A common code is provided which relates to handling input and output operations and scheduling the two instances of the calculation code (e.g., A and A') sequentially, and the method comprises executing the common code only once. This part of the code is only in one copy. There are a number of operations that only can be performed once. These are, e.g., tasks related to the operating system, which typically is only one. It may also be tasks related to initiation of hardware circuits.

In the figures these tasks are booting up the system, initializations of the operating system (OS) and the hardware (HW), and the common code. These tasks are performed during a system start-up period indicated above the horizontal dot dash line.

The main part of the common code relates to assuring that all functions are called upon in a correct way and in the correct order.

See illustrations in the figures with arrows of the common code starting from "Common Code" to "A-code" and "A^{C}-code" (or corresponding in the other concepts), respectively.
It is the common code that in the start of an execution cycle assures that input data is "frozen" to ascertain that both code instances will process identic data. Otherwise there would be no guarantee the result will be the same.

According to a further embodiment, also applicable to all concepts described above, if the results differ, the method comprises indicating a hardware or a software error, and performing a predefined safety procedure.
The predefined safety procedure is related to a system where the microcontroller unit is applied, and wherein the system being provided at a train or in connection with the operation of a train.
According to one implementation the state of the system is set in a safe state, which, e.g., in a railway implementation could involve to brake the train until it is stopped, and for a traffic controlled junction it could involve to set all signals to indicate stop.
According to another implementation the most restrictive result may be chosen. However, this implementation may have some drawbacks; the results should not differ if everything works as intended and to continue despite a detected difference may have consequences later in the process. However, by analyzing the specific system and the specific case it may be concluded to safely continue using the most restrictive result.

The present invention also relates to a microcontroller unit being configured to perform hardware error detection. With reference to figure 6, the microcontroller unit (MCU) 2 will now be disclosed. The MCU is configured to perform hardware (HW) error detection and comprises a memory unit 4, an interface member 6 and a central processing unit (CPU) 8 comprising at least one processor core 10; the CPU may be provided with multiple cores, e.g., 2, 3, 4, or more cores. The microcontroller unit (2) is configured to execute software programs.

Thus, the microcontroller unit or CPU is preferably implemented in a multicore CPU. Advantageously the CPU is provided with an internal voting mechanism. According to a further variation the microcontroller unit or CPU is implemented in a single core CPU.
According to still another variation the microcontroller or CPU is implemented as a soft core, i.e., an IP block in a field-programmable gate array (FPGA).

The microcontroller unit is configured to provide a software program comprising executable machine instructions; the program is basically divided into three parts, one common part and two instances, A and modified A, performing the same functions. The memory unit 4 is configured to store input data collected by the common part. The CPU 8 is structured to sequentially execute the program instance A and the modified version of the program instance A, the memory unit 4 is configured to store output data of the executed program instances being the results of the execution of the respective program instance. The microcontroller unit 2 is configured to compare the output data of the sequentially executed program instance A and that of the modified version of program instance A. This comparison can either be performed in a second step of each of the two program instances or by the common code.
If the results of the comparison are equal the stored output data is unlocked and the MCU is configured to repeat the storing of input data, the execution of the program instance and the modified program instance, the storing of the results, and comparing the result.
If the results differ the MCU is configured to generate an indication signal 14 to indicate a hardware error.

The MCU is configured to provide a modified version of program A according to different concepts, which has been exemplified above in connection with the description of the method and with references to the illustrations in figures 2-5. For sake of simplicity we refer to the above description for the disclosure of how program A may be modified by the MCU.

The present invention is not limited to the above-described preferred embodiments. Various alternatives or modifications, may be used. Therefore, the above embodiments should not be taken as limiting the scope of the invention, which is defined by the appending claims.

## Claims

1. A method of hardware (HW) error detection in a lockstep microcontroller unit (MCU) that comprises a memory unit, an interface member and a central processing unit (CPU), the microcontroller unit is configured to execute software programs,
- providing two software program instances A and A^{C}, where A^{C} is a modified version, each comprising executable machine instructions, and being generated from identical source code run through two different compilers,
wherein said method further comprises:
- storing input data,
- executing the program instance A and said modified version A^{C} of the program instance A sequentially by said CPU,
- storing output data of the executed program instances being the results of the execution of the respective program instance,
- comparing the output data of the sequentially executed program instance A and the modified version A^{C} of program instance A, wherein
a common code of code A is provided, said common code handling input and output operations and scheduling the two instances A and A^{C} sequentially, and in the start of an execution cycle the common code assures that input data is "frozen" to ascertain that both code instances will process identical data, and the method comprises executing said common code only once, and wherein
if the results of the comparison are equal the stored output data is unlocked and the method comprises cyclically repeating the steps of storing input data, executing the program instance A and said modified program instance A^{C}, storing the results of the two instances, and comparing the results, and
if the results differ the method comprises
- indicating a hardware or software error.

2. The method according to claim 1, wherein the steps which are cyclically repeated have an overall duration in the order of 1 - 500 ms.

3. The method according to any preceding claim, wherein if the results differ the method further comprises:
- performing a predefined safety procedure.

4. The method according to claim 3, wherein said predefined safety procedure is related to a system where said microcontroller unit is applied, and wherein said system is being provided at a train or in connection with the operation of a train.

## Patentansprüche

1. Ein Verfahren zur Hardware (HW)-Fehlererkennung in einer Lockstep-Mikrocontrollereinheit (MCU), die eine Speichereinheit, ein Schnittstellenelement und eine zentrale Verarbeitungseinheit (CPU) umfasst, wobei die Mikrocontrollereinheit dazu ausgebildet ist, Softwareprogramme auszuführen, wobei
- zwei Softwareprogramminstanzen A und A^{C} bereitgestellt werden, wobei A^{C} eine modifizierte Version ist, von denen jede ausführbare Maschinenanweisungen umfasst und aus einem identischen Quellcode generiert wurde, der durch zwei unterschiedliche Kompilierer verarbeitet wurde,
wobei das Verfahren weiter umfasst:
- Speichern von Eingabedaten,
- sequentielles Ausführen der Programminstanz A und der modifizierten Version A^{C} der Programminstanz A durch die CPU,
- Speichern von Ausgabedaten der ausgeführten Programminstanzen, welche die Ergebnisse der Ausführung der jeweiligen Programminstanz sind,
- Vergleichen der Ausgabedaten der sequentiell ausgeführten Programminstanz A und der modifizierten Version A^{C} der Programminstanz A, wobei ein gemeinsamer Code des Codes A bereitgestellt wird, wobei der gemeinsame Code Eingabe- und Ausgabeoperationen handhabt und die beiden Instanzen A und A^{C} sequentiell plant, und wobei der einheitliche Code bei einem Start eines Ausführungszyklus sicherstellt, dass die Eingabedaten "eingefroren" sind, um zu bestimmen, dass beide Programminstanzen identische Daten verarbeiten werden, und das Verfahren umfasst, dass der einheitliche Code nur einmal ausgeführt wird, und wobei für den Fall, dass die verglichenen Resultate gleich sind, die gespeicherten Ausgabedaten entsperrt werden und das Verfahren ein zyklisches Wiederholen der Schritte des Speicherns von Eingabedaten, des Ausführens der Programminstanz A und der modifizierten Programminstanz A^{C}, des Speicherns der Ergebnisse der beiden Instanzen und des Vergleichens der Ergebnisse, umfasst, und für den Fall, dass sich die Resultate unterscheiden, das Verfahren umfasst
- Anzeigen eines Hardware- oder Softwarefehlers.

2. Verfahren nach Anspruch 1, wobei die Schritte, die zyklisch wiederholt werden, eine Gesamtdauer in der Größenordnung von 1 - 500 ms haben.

3. Verfahren nach einem der vorherigen Ansprüche, wobei für den Fall, dass sich die Resultate unterscheiden, das Verfahren weiter umfasst:
- das Durchführen eines vordefinierten Sicherheitsverfahrens.

4. Verfahren nach Anspruch 3, wobei sich das vordefinierte Sicherheitsverfahren auf ein System bezieht, in dem die Mikrocontrollereinheit verwendet wird, und wobei das System an einem Zug oder in Verbindung mit dem Betrieb eines Zuges bereitgestellt wird.

## Revendications

1. Procédé de détection d'erreur matérielle (HW) dans une unité de microcontrôleur (MCU) en mode rigide qui comprend une unité de mémoire, un organe d'interface et une unité centrale de traitement (CPU), l'unité de microcontrôleur est configurée pour exécuter des programmes logiciels,
- la fourniture de deux instances de programme logiciel A et A^{C}, où A^{C} est une version modifiée, comprenant chacune des instructions-machine exécutables, et qui sont générées depuis un code source identique exécuté par le biais de deux compilateurs différents, dans lequel ledit procédé comprend en outre :
- le stockage de données d'entrée,
- l'exécution séquentielle de l'instance de programme A et de ladite version modifiée A^{C} de l'instance de programme A par ladite CPU,
- le stockage de données de sortie des instances de programme exécutées qui sont les résultats de l'exécution de l'instance de programme respective,
- la comparaison des données de sortie de l'instance de programme A et de la version modifiée A^{C} de l'instance de programme A exécutées séquentiellement, dans lequel
un code commun de code A est fourni, ledit code commun gérant des opérations d'entrée et de sortie et ordonnançant séquentiellement les deux instances A et A^{C}, et au démarrage d'un cycle d'exécution le code commun s'assure que des données d'entrée sont « gelées » pour déterminer que les deux instances de code traiteront des données identiques, et le procédé comprend l'exécution dudit code commun une fois seulement, et dans lequel si les résultats de la comparaison sont égaux les données de sortie stockées sont déverrouillées et le procédé comprend la répétition cyclique des étapes de stockage de données d'entrée, l'exécution de l'instance de programme A et de ladite instance de programme modifiée A^{C}, de stockage des résultats des deux instances, et de comparaison des résultats, et si les résultats diffèrent le procédé comprend
- l'indication d'une erreur matérielle ou logicielle.

2. Procédé selon la revendication 1, dans lequel les étapes qui sont répétées cycliquement ont une durée globale de l'ordre de 1 à 500 ms.

3. Procédé selon l'une quelconque des revendications précédentes, dans lequel si les résultats diffèrent le procédé comprend en outre :
- la réalisation d'une procédure de sécurité prédéfinie.

4. Procédé selon la revendication 3, dans lequel ladite procédure de sécurité prédéfinie se rapporte à un système où ladite unité de microcontrôleur est appliquée, et dans lequel ledit système est prévu dans un train ou en lien avec le fonctionnement d'un train.
